# EUROPEAN PATENT APPLICATION

(11) **EP 4 664 552 A1**
(43) Date of publication of application: **17.12.2025**
(21) Application number: 23937837.5
(22) Date of filing: 19.05.2023
(51) Int. Cl.: H01M 4/36

(54) **POSITIVE ELECTRODE SHEET, BATTERY, AND ELECTRICAL DEVICE**

(71) Applicant: Contemporary Amperex Technology Co., Limited, Ningde, Fujian 352100 (CN)
(72) Inventor: QIN, Pengcheng, Ningde, Fujian 352100 (CN); ZHANG, Le, Ningde, Fujian 352100 (CN); LIU, Qiang, Ningde, Fujian 352100 (CN); SUN, Yu, Ningde, Fujian 352100 (CN); LI, Baiqing, Ningde, Fujian 352100 (CN); JIN, Haizu, Ningde, Fujian 352100 (CN)
(74) Representative: Ran, Handong
(86) International application number: PCT/CN2023/095348
(87) International publication number: WO 2024/239158

(57) **Abstract**

Embodiments of the present application relate to the field of batteries, and provide a positive electrode sheet, a battery, and an electrical device. The positive electrode sheet comprises a current collector and an active material layer disposed on at least one side surface of the current collector. In the mixed active material layer, a positive electrode active material comprises a first positive electrode active material and a second positive electrode active material, wherein the average particle size R2 of the second positive electrode active material is greater than the average particle size R1 of the first positive electrode active material, R2/R1 ≥ 2, and the first positive electrode active material or the second positive electrode active material accounts for 55%-95% of the total mass of the positive electrode active material in the mixed active material layer. The positive electrode sheet can not only improve the energy density of the battery, but also ameliorate the impedance deterioration and improve the dynamic performance of the battery.

## Description

### TECHNICAL FIELD

The present application relates to the field of batteries, specifically to a positive electrode plate, a battery, and an electric apparatus.

### BACKGROUND

Energy conservation and emission reduction are key to the sustainable development of automobile industry. Electric vehicles, due to advantages in energy conservation and environmental protection of the electric vehicles, have become an important part of the sustainable development of the automobile industry. For the electric vehicles, battery technology is an important factor in connection with development of the electric vehicles.

Based on a positive electrode active material layer prepared by mixing two positive electrode active materials, compared to a positive electrode active material layer with a single active material, energy density, safety performance, or the like exhibits certain optimization and improvement.

### SUMMARY

The inventors of the present application have found that, after mixing positive electrode active materials with significantly different particle sizes in similar amounts, kinetic performance of an entire battery is poor. The present application provides a positive electrode plate, a battery, and an electric apparatus, which not only increase energy density of the battery but also mitigate impedance deterioration and enhance the kinetic performance of the battery.

In a first aspect, the present application provides a positive electrode plate, including a current collector and an active material layer disposed on at least one side surface of the current collector. The active material layer includes at least one mixed active material layer. In the mixed active material layer, a positive electrode active material includes a first positive electrode active material and a second positive electrode active material. An average particle size R2 of the second positive electrode active material is greater than an average particle size R1 of the first positive electrode active material, and R2/R1≥2. The first positive electrode active material or the second positive electrode active material accounts for 55% to 95% of a total mass of the positive electrode active material in the mixed active material layer.

In a technical solution of the embodiments of the present application, the mixed active material layer mainly contains two types of positive electrode active materials with different particle sizes used in combination: one type is a positive electrode active material with a smaller average particle size, and the other type is a positive electrode active material with a larger average particle size. The combination of positive electrode active materials with large and small particle sizes can accommodate more positive electrode active material within the same volume, which increases tap density, and is beneficial for increasing volumetric energy density of the battery. Moreover, a larger proportion of either the large-particle-size positive electrode active material or the small-particle-size positive electrode active material can mitigate impedance deterioration and also address the issue of poor kinetic performance caused by mixing materials with significant particle size differences and similar contents in the same layer, thereby enhancing the kinetic performance of the battery.

In some embodiments, the first positive electrode active material or the second positive electrode active material accounts for 65% to 80% of the total mass of the positive electrode active material.

In some embodiments, 100≥R2/R1≥5, optionally 100≥R2/R1≥10. A particle size ratio of the positive electrode active materials with large and small particle sizes within a certain range can simultaneously increase the energy density and enhance the kinetic performance of the battery.

In some embodiments, R1 is any value between 0.1 µm and 0.4 µm, and R2 is any value between 1 µm and 20 µm.

In some embodiments, in the mixed active material layer, the first positive electrode active material and the second positive electrode active material are different positive electrode active materials. The mixed active material layer not only adopts a combination of large and small particle sizes but also adopts a combination of different materials, which can enhance the comprehensive performance of the battery.

In some embodiments, the active material layer includes at least two sublayers, where at least one sublayer is the mixed active material layer.

In some embodiments, two adjacently disposed sublayers are respectively a first mixed active material layer and a second mixed active material layer. An average particle size of the first positive electrode active material in the first mixed active material layer is R1, an average particle size of the second positive electrode active material is R2, and R2/R1≥2. The positive electrode active material in the second mixed active material layer includes a third positive electrode active material and a fourth positive electrode active material. An average particle size of the third positive electrode active material is R1', an average particle size of the fourth positive electrode active material is R2', and R2'/R1'≥2. The active material layer is layered, and at least two adjacent layers are mixed active material layers, which can increase the energy density of the battery and also address the issue of poor kinetic performance caused by mixing materials with significant particle size differences and similar contents in the same layer.

In some embodiments, a difference between R2 and R1' is not greater than 10 µm, and/or a difference between R2' and R1 is not greater than 10 µm. The particle size difference of the positive electrode active materials in two adjacent mixed active material layers is small, resulting in a relatively uniform overall density.

In some embodiments, the first mixed active material layer is closer to the current collector than the second mixed active material layer, and a value of R2/R1 is greater than a value of R2'/R1'. The particle size difference of the positive electrode active materials with large and small particle sizes in the mixed active material layer away from the current collector is relatively small, which is beneficial for enhancing the kinetic performance of an electrode plate.

In some embodiments, one of two adjacently disposed sublayers is the mixed active material layer, and the other is a single active material layer. A positive electrode active material in the single active material layer includes the first positive electrode active material or the second positive electrode active material. This embodiment provides an alternative solution that can address the issue of poor kinetic performance.

In some embodiments, the mixed active material layer is closer to the current collector than the single active material layer. The single active material layer is located on an outer side, which is beneficial for enhancing the kinetic performance of the electrode plate.

In some embodiments, the positive electrode active material in the single active material layer includes the first positive electrode active material. The single active material layer adopts a small-particle-size positive electrode active material, with a shorter ion transmission path, which is beneficial for enhancing the kinetic performance of the electrode plate.

In some embodiments, the positive electrode active material includes at least one of lithium nickel cobalt manganate, lithium nickel cobalt aluminate, lithium nickel cobalt manganese aluminate, lithium iron phosphate, lithium manganese iron phosphate, doped lithium manganese iron phosphate, lithium cobalt oxide, lithium manganese oxide, lithium-rich positive electrode material, lithium nickel manganate, and doped or coated materials of the above materials.

In some embodiments, the sublayer contains a linear conductive agent; optionally, in the sublayer, a mass proportion of the linear conductive agent with a length ≥1 µm is 0.2% to 1%; and optionally, the linear conductive agent includes at least one of carbon nanotubes, carbon fiber, and linear graphene. A certain proportion of linear conductive substance is added to the sublayer and is dispersed around different positive electrode active materials to connect and conduct, maintaining stability of a conductive network.

In some embodiments, in two adjacent sublayers, a porosity of the sublayer on a side away from the current collector is ≥30%, and a porosity of the sublayer on a side close to the current collector is ≥50%.

Optionally, the porosity of the sublayer on the side away from the current collector is ≥50%, and the porosity of the sublayer on the side close to the current collector is ≥60%. In the active material layer, the sublayer on the side away from the current collector has sufficient contact with an electrolytic solution, while the sublayer on the side close to the current collector has less contact with the electrolytic solution. By setting different porosities for different sublayers, the electrolytic solution can fully infiltrate within different sublayers.

In a second aspect, the present application provides a battery, including a cell composed of the positive electrode plate provided in the first aspect.

In a third aspect, the present application provides an electric apparatus, including the battery provided according to the second aspect.

The above description is only an overview of the technical solution of the present application. To enable a clearer understanding of the technical means of the present application, implementation can be carried out in accordance with the contents of the specification. To make the above and other objectives, features, and advantages of the present application more apparent and understandable, specific embodiments of the present application are exemplified below.

### BRIEF DESCRIPTION OF DRAWINGS

By reading detailed description of preferred embodiments below, various other advantages and benefits will become clear to persons of ordinary skill in the art. Drawings are only for the purpose of illustrating the preferred embodiments and are not considered as limiting the present application. Moreover, throughout all drawings, identical components are denoted by identical reference numerals. In the drawings:
FIG. 1 is a schematic structural diagram of a vehicle according to some embodiments of the present application;
FIG. 2 is an exploded schematic structural diagram of a battery according to some embodiments of the present application;
FIG. 3 is a schematic structural diagram of a battery cell according to some embodiments of the present application; and
FIG. 4 is an exploded schematic structural diagram of a battery cell according to some embodiments of the present application.

Reference numerals: 1000. vehicle; 100. battery; 10. case; 11. accommodation space; 12. first part; 13. second part; 20. battery cell; 21. housing; 211. opening; 22. end cap assembly; 221. end cap; 222. electrode terminal; 23. electrode assembly; 24. current collecting member; 25. insulating protective member; 200. controller; and 300. motor.

### DESCRIPTION OF EMBODIMENTS

Embodiments of technical solutions of the present application are described in detail below with reference to drawings. The following embodiments are only used to more clearly illustrate the technical solutions of the present application and thus serve as examples only, rather than limiting the protection scope of the present application.

Unless otherwise defined, all technical and scientific terms used herein have the same meanings as commonly understood by persons skilled in the technical field to which the present application pertains; the terms used herein are solely for the purpose of describing specific embodiments and are not intended to limit the present application; the terms "include" and "have" and any variations thereof in the specification, the claims, and the above description of the drawings of the present application are intended to cover non-exclusive inclusion.

In the description of the embodiments of the present application, the technical terms "first," "second," and the like are only used to distinguish different objects and are not to be understood as indicating or implying relative importance or implicitly indicating the number, specific order, or primary-subordinate relationship of the technical features indicated. In the description of the embodiments of the present application, "a plurality of" means two or more, unless explicitly and specifically defined otherwise.

Reference herein to "embodiment" means that specific features, structures, or characteristics described in connection with the embodiment may be included in at least one embodiment of the present application. The appearance of this phrase in various positions in the specification does not necessarily refer to the same embodiment, nor is it an independent or alternative embodiment mutually exclusive with other embodiments. Persons skilled in the art explicitly and implicitly understand that the embodiments described herein may be combined with other embodiments.

In the description of the embodiments of the present application, the term "and/or" is only an associative relationship describing associated objects, indicating that three relationships may exist. For example, A and/or B may indicate the following three cases: presence of A alone, presence of both A and B, and presence of B alone. Additionally, the character "/" herein generally indicates that the associated objects before and after are in an "or" relationship.

In the description of the embodiments of the present application, the orientation or positional relationships indicated by the technical terms "thickness," "upper," "lower," "front," "rear," "top," "bottom," "inner," "outer," and the like are based on the orientation or positional relationships shown in the drawings, only for the convenience of describing the embodiments of the present application and simplifying the description, and do not indicate or imply that the referred device or element must have a specific orientation, be constructed and operated in a specific orientation, and thus cannot be understood as limiting the embodiments of the present application.

In the description of the embodiments of the present application, unless explicitly specified and defined otherwise, the technical terms "connect," "fix," and the like are to be understood in a broad sense, for example, as a fixed connection, a detachable connection, or an integral formation; as a mechanical connection or an electrical connection; as a direct connection or an indirect connection through an intermediate medium; or as an internal communication between two elements or an interaction relationship between two elements. Persons of ordinary skill in the art can understand the specific meanings of the above terms in the embodiments of the present application based on specific circumstances.

Currently, from the perspective of market development trends, the application of power batteries is becoming increasingly widespread. Power batteries are not only applied in energy storage power systems such as hydroelectric, thermal, wind, and solar power stations but also widely used in electric transportation vehicles such as electric bicycles, electric motorcycles, and electric vehicles, as well as in a plurality of fields such as military equipment and aerospace. With continuous expansion of application fields of the power batteries, the market demand for the power batteries is also continuously increasing.

The power battery may be a lithium-ion battery. During a charging process of a lithium-ion battery, lithium ions deintercalate from a positive electrode active material, are transmitted through an electrolytic solution, pass through a separator, and intercalate into a negative electrode active material. Currently, a positive electrode active material layer prepared by mixing two active materials, compared to a positive electrode active material layer with a single active material, exhibits a certain increase in energy density. However, the inventors of the present application have found that, for two positive electrode active materials with significantly different particle sizes, when the mass ratios of the two positive electrode active materials with significantly different particle sizes are the same or similar, directly physically mixing the two positive electrode active materials with significantly different particle sizes to form a single positive electrode active material layer results in relatively low kinetic performance of the battery.

Based on the above considerations, to address an issue that a mixed active material layer has a difficulty in simultaneously improving kinetic performance, a positive electrode plate is designed. Through a refined structural design of the positive electrode plate of a lithium-ion battery, clear design principles and bases for the positive electrode plate are provided, which can improve the kinetic performance of the battery while increasing energy density.

A battery cell disclosed in the embodiments of the present application may be used in, but is not limited to, electric apparatuses such as vehicles, ships, or aircraft.

The embodiments of the present application provide an electric apparatus using a battery as a power source. The electric apparatus may be, but is not limited to, a mobile phone, a tablet, a laptop, an electric toy, an electric tool, an electric bicycle, an electric vehicle, a ship, a spacecraft, and the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For convenience of explanation, the following embodiments take an electric apparatus according to an embodiment of the present application being a vehicle 1000 as an example for description.

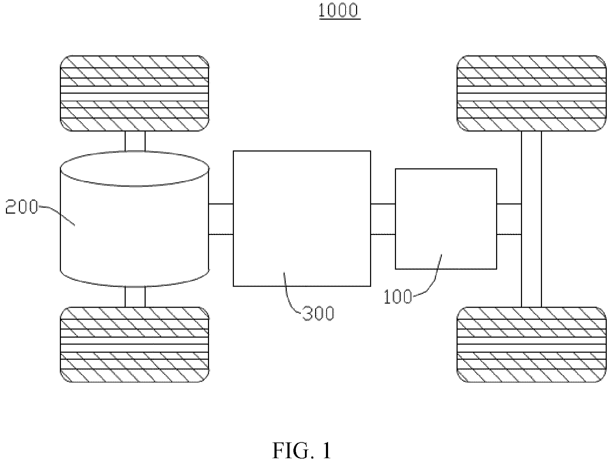

Referring to FIG. 1, FIG. 1 is a schematic structural diagram of a vehicle 1000 according to some embodiments of the present application. The vehicle 1000 is provided with a battery 100 inside, and the battery 100 may be disposed at a bottom, front, or rear of the vehicle 1000. The battery 100 may be configured to supply power to the vehicle 1000, for example, the battery 100 may serve as an operational power source for the vehicle 1000.

The vehicle 1000 may further include a controller 200 and a motor 300. The controller 200 is configured to control the battery 100 to supply power to the motor 300, for example, for the operational power demands of the vehicle 1000 during starting, navigation, and driving.

In some embodiments of the present application, the battery 100 may not only serve as an operational power source for the vehicle 1000 but also as a driving power source for the vehicle 1000, replacing or partially replacing fuel or natural gas to provide driving power for the vehicle 1000.

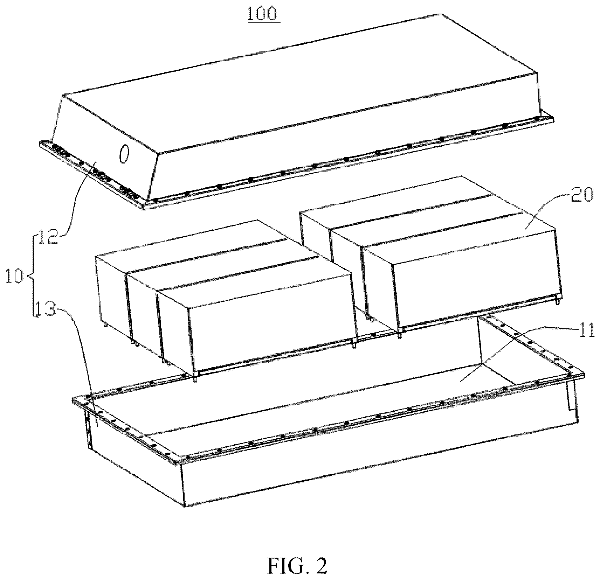

FIG. 2 is an exploded schematic structural diagram of a battery 100 according to some embodiments of the present application. Refer to FIG. 2. The battery 100 includes a case 10 and a battery cell 20, and the battery cell 20 is accommodated within the case 10.

The case 10 is configured to provide an accommodation space 11 for the battery cell 20. In some embodiments, the case 10 may include a first part 12 and a second part 13. The first part 12 and the second part 13 mutually cover each other to define the accommodation space 11 for accommodating the battery cell 20. Certainly, a joint of the first part 12 and the second part 13 may be sealed by a sealing member (not shown in the figure), and the sealing member may be a sealing ring, a sealing adhesive, or the like.

The first part 12 and the second part 13 may be of various shapes, such as a cuboid and a cylinder. The first part 12 may be a hollow structure with an opening on one side to form an accommodation cavity for accommodating the battery cell 20, and the second part 13 may also be a hollow structure with an opening on one side to form an accommodating cavity for accommodating the battery cell 20. An opening side of the second part 13 covers an opening side of the first part 12, forming the case 10 with the accommodation space 11. Certainly, as shown in FIG. 2, the first part 12 may alternatively be a hollow structure with an opening on one side, and the second part 13 may be a plate-like structure. The second part 13 covers the opening side of the first part 12, forming the case 10 with the accommodation space 11.

In the battery 100, there may be one or more battery cells 20. If there are a plurality of battery cells 20, the plurality of battery cells 20 may be connected in series, in parallel, or in a mixed connection. The mixed connection refers to the plurality of battery cells 20 having both series and parallel connections. The plurality of battery cells 20 may be directly connected in series, in parallel, or in a mixed connection, and then an entirety of the plurality of battery cells 20 is accommodated in the case 10; or certainly, the plurality of battery cells 20 may alternatively be first connected in series, in parallel, or in a mixed connection to form a battery module, and then a plurality of battery modules are connected in series, in parallel, or in a mixed connection to form an entirety which is accommodated in the case 10. The battery cell 20 may be in the shape of a cylinder, a flat body, a cuboid, or other shapes. FIG. 2 exemplarily shows a case where the battery cell 20 is square.

In some embodiments, the battery 100 may further include a busbar component (not shown in the figure). The plurality of battery cells 20 may be electrically connected through the busbar component to achieve series, parallel, or mixed connection of the plurality of battery cells 20.

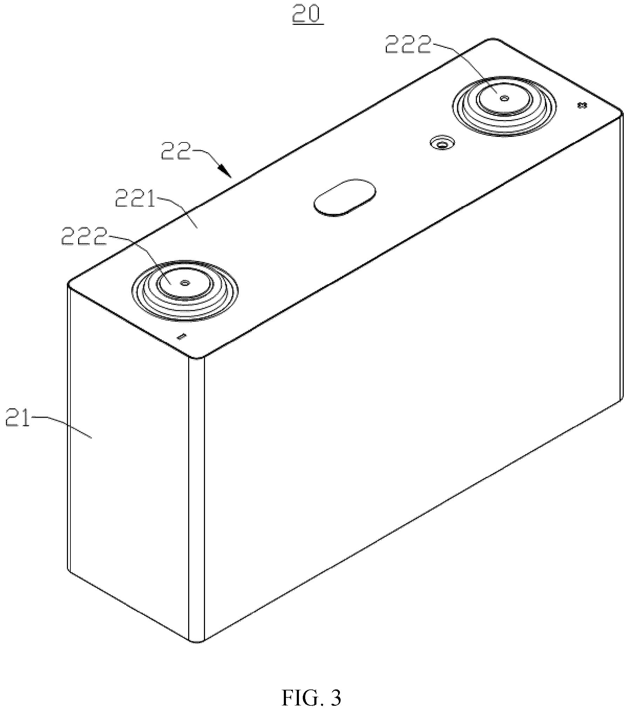

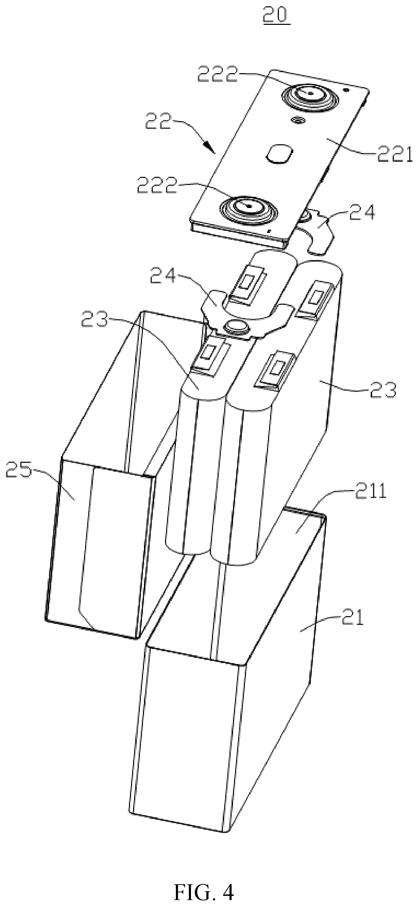

FIG. 3 is a schematic structural diagram of a battery cell 20 according to some embodiments of the present application, and FIG. 4 is an exploded view of a battery cell 20 according to some embodiments of the present application. Refer to FIG. 3 and FIG. 4. The battery cell 20 may include a housing 21, an end cap assembly 22, and an electrode assembly 23. The housing 21 has an opening 211, the electrode assembly 23 is accommodated in the housing 21, and the end cap assembly 22 is configured to cover the opening 211.

The shape of the housing 21 may be determined based on a specific shape of the electrode assembly 23. For example, if the electrode assembly 23 is in a cuboid structure, the housing 21 may adopt a cuboid structure. FIG. 3 and FIG. 4 exemplarily show a case where the housing 21 and the electrode assembly 23 are square.

The material of the housing 21 may alternatively be of various types, such as copper, iron, aluminum, stainless steel, and aluminum alloy. This is not specifically limited in the embodiments of the present application.

The end cap assembly 22 includes an end cap 221 and an electrode terminal 222. The end cap assembly 22 is configured to seal the opening 211 of the housing 21 to form a sealed installation space (not shown in the figure). The installation space is configured to accommodate the electrode assembly 23. The installation space is further configured to accommodate an electrolyte, such as an electrolytic solution. The end cap assembly 22 serves as a component for outputting electrical energy of the electrode assembly 23, and the electrode terminal 222 in the end cap assembly 22 is configured to be electrically connected to the electrode assembly 23, that is, the electrode terminal 222 is electrically connected to a tab of the electrode assembly 23. For example, the electrode terminal 222 is connected to the tab through a current collecting member 24 to achieve electrical connection between the electrode terminal 222 and the tab.

It is to be noted that, the housing 21 may have one or two openings 211. If the housing 21 has one opening 211, there is also one end cap assembly 22, and two electrode terminals 222 may be provided in the end cap assembly 22. The two electrode terminals 222 are respectively configured to be electrically connected to a positive tab and a negative tab of the electrode assembly 23. If the housing 21 has two openings 211, for example, the two openings 211 are disposed on opposite sides of the housing 21, there are also two end cap assemblies 22, and the two end cap assemblies 22 respectively cover the two openings 211 of the housing 21. In this case, the electrode terminal 222 in one end cap assembly 22 may be a positive electrode terminal configured to be electrically connected to the positive tab of the electrode assembly 23; and the electrode terminal 222 in the other end cap assembly 22 may be a negative electrode terminal configured to be electrically connected to a negative electrode plate of the electrode assembly 23.

In some embodiments, as shown in FIG. 4, the battery cell 20 may further include an insulating protective member 25 fixed to an outer periphery of the electrode assembly 23. The insulating protective member 25 is configured to insulate and isolate the electrode assembly 23 from the housing 21. Exemplarily, the insulating protective member 25 is an adhesive tape bonded to the outer periphery of the electrode assembly 23. In some embodiments, there are a plurality of electrode assemblies 23, and the insulating protective member 25 surrounds the outer periphery of the plurality of electrode assemblies 23, and the plurality of electrode assemblies 23 form an integral structure to maintain structural stability of the electrode assemblies 23.

According to some embodiments of the present application, the positive electrode plate includes a current collector and an active material layer disposed on at least one side surface of the current collector. The active material layer includes at least one mixed active material layer. In the mixed active material layer, a positive electrode active material includes a first positive electrode active material and a second positive electrode active material. An average particle size R2 of the second positive electrode active material is greater than an average particle size R1 of the first positive electrode active material, and R2/R1≥2. The first positive electrode active material or the second positive electrode active material accounts for 55% to 95% of a total mass of the positive electrode active material in the mixed active material layer, and correspondingly, the second positive electrode active material or the first positive electrode active material accounts for 5% to 45% of the total mass of the positive electrode active material.

The average particle size in the present application is an average particle size of a collection of positive electrode active materials with relatively concentrated particle sizes. The electrode plate is cut perpendicular to a surface of the electrode plate, an SEM photograph is taken for a cut cross-section, particle sizes of 20 large particles are measured from the photograph, and an average value is taken as the average particle size of the second positive electrode active material; and particles sizes of 20 small particles are measured, and an average value is taken as the average particle size of the first positive electrode active material.

In some embodiments of the present application, other layers, such as an adhesive layer, may further be disposed between the current collector and the active material layer.

Through a structural design of the positive electrode plate of a lithium-ion battery, the combination of positive electrode active materials with large and small particle sizes can accommodate more positive electrode active material within the same volume, which increases tap density and is beneficial for increasing the volumetric energy density of the battery. Moreover, a larger proportion of either the large-particle-size positive electrode active material or the small-particle-size positive electrode active material can mitigate impedance deterioration and also enhance the kinetic performance of the battery.

According to some embodiments of the present application, in the mixed active material layer, the first positive electrode active material or the second positive electrode active material accounts for 65% to 80% of a total mass of the positive electrode active material, and the second positive electrode active material or the first positive electrode active material accounts for 20% to 35% of the total mass of the positive electrode active material. Exemplarily, the second positive electrode active material may account for 65%, 70%, 75%, or 80% of the total mass of the positive electrode active material, or any value within the above two numerical ranges; and the first positive electrode active material may account for 20%, 25%, 30%, or 35% of the total mass of the positive electrode active material, or any value within the above two numerical ranges. Alternatively, the first positive electrode active material may account for 65%, 70%, 75%, or 80% of the total mass of the positive electrode active material, or any value within the above two numerical ranges; and the second positive electrode active material may account for 20%, 25%, 30%, or 35% of the total mass of the positive electrode active material, or any value within the above two numerical ranges.

In some embodiments, 100≥R2/R1≥5, or 100≥R2/R1≥10. Exemplarily, R2/R1 is 2, 4, 5, 8, 10, 20, 30, 40, 50, 60, 70, 80, 90, or 100, or any value within the above two numerical ranges.

In some embodiments, R1 is any value between 0.1 µm and 0.4 µm, and R2 is any value between 1 µm and 20 µm. Exemplarily, R1 may be 0.1 µm, 0.2 µm, 0.3 µm, or 0.4 µm, or any value within the above two numerical ranges; and R2 may be 1 µm, 3 µm, 5 µm, 7 µm, 10 µm, 12 µm, 15 µm, 18 µm, or 20 µm, or any value between the above two numerical ranges.

In some embodiments, in the mixed active material layer, the first positive electrode active material and the second positive electrode active material being different positive electrode active materials means that specific materials of the first positive electrode active material and the second positive electrode active material are different.

In some embodiments, in the mixed active material layer, a sum of masses of the first positive electrode active material and the second positive electrode active material is 90% to 100% of a total mass of the positive electrode active material, optionally, the sum of masses of the first positive electrode active material and the second positive electrode active material is 95% to 100% of the total mass of the positive electrode active material; and optionally, in the mixed active material layer, the sum of masses of the first positive electrode active material and the second positive electrode active material is 98% to 100% of the total mass of the positive electrode active material. Exemplarily, the sum of masses of the first positive electrode active material and the second positive electrode active material may be 90%, 92%, 95%, 96%, 97%, 98%, 99%, or 100% of the total mass of the positive electrode active material, or any value within the above two numerical ranges.

In some embodiments, the active material layer includes at least two sublayers, where at least one sublayer is the mixed active material layer.

As one embodiment, two adjacently disposed sublayers are respectively a first mixed active material layer and a second mixed active material layer. An average particle size of the first positive electrode active material in the first mixed active material layer is R1, an average particle size of the second positive electrode active material is R2, and R2/R1≥2. The positive electrode active material in the second mixed active material layer includes a third positive electrode active material and a fourth positive electrode active material. An average particle size of the third positive electrode active material is R1', an average particle size of the fourth positive electrode active material is R2', and R2'/R1'≥2.

The active material layer in the present application being a layered structure means that the active material layer includes two or more sublayers with a boundary line. The boundary line refers to a dividing line formed at a contact position between two adjacent sublayers composed of different compositions, and there may be some crossover at the contact position between the two adjacent sublayers, that is, a transition layer is formed. Exemplarily, the two sublayers have different positive electrode active materials, for example, the second positive electrode active material with a larger average particle size in two adjacent sublayers is a different substance, and the first positive electrode active material with a smaller average particle size in two adjacent sublayers is a different substance; and there are differences in the proportions of the positive electrode active materials in the two sublayers, for example, the proportions of the second positive electrode active materials with a larger average particle size in two adjacent sublayers are different.

The first mixed active material layer on one side of the boundary line contains a first positive electrode active material with a small average particle size (average particle size R1) and a second positive electrode active material with a large average particle size (average particle size R2), R2/R1≥2, and the mass proportion of the first positive electrode active material with a small particle size (R1) or the second positive electrode active material with a large particle size (R2) is relatively large, accounting for 55% to 95% of a total mass of the positive electrode active material in the first mixed active material layer; the second mixed active material layer on the other side of the boundary line also contains a third positive electrode active material with a small average particle size (average particle size R1') and a fourth positive electrode active material with a large average particle size (average particle size R2'), R2'/R1'≥2, and the mass proportion of the first positive electrode active material with a small particle size (R1') or the fourth positive electrode active material with a large particle size (R2') is relatively large, accounting for 55% to 95% of a total mass of the positive electrode active material in the second mixed active material layer.

The second positive electrode active materials with large particle sizes in the two mixed active material layers may be substances with the same average particle size or different average particle sizes, and may be the same substance or different substances; and the second positive electrode active materials with small particle sizes in the two mixed active material layers may be substances with the same average particle size or different average particle sizes, and may be the same substance or different substances.

Adjustments may be made according to performance design requirements to fully leverage advantages of a layered design.

In some embodiments, a difference between R2 and R1' is not greater than 10 µm, and/or a difference between R2' and R1 is not greater than 10 µm. A difference between a maximum particle size in one mixed active material layer and a minimum particle size in another mixed active material layer is not greater than 10 µm, and an overall particle size difference is not excessively large.

In some embodiments, the first mixed active material layer is closer to the current collector than the second mixed active material layer, and a value of R2/R1 is greater than a value of R2'/R1'.

Exemplarily, the positive electrode plate includes the following structures:
(a) An active material layer on a front side of the current collector is divided into a first mixed active material layer and a second mixed active material layer. The positive electrode active material in the first mixed active material layer on a surface is divided into a first positive electrode active material with an average particle size R1 and a second positive electrode active material with an average particle size R2, and 10>R2/R1>2. The positive electrode active material in the second mixed active material layer contacting the current collector is divided into a first positive electrode active material with an average particle size R1' and a second positive electrode active material with an average particle size R2', 100>R2'/R1'>10, and R2=R2'.
   An active material layer on a back side of the current collector is divided into two mixed active material layers, which are disposed symmetrically with the active material layer on the front side with respect to the current collector: the positive electrode active material in the first mixed active material layer on the surface is divided into a first positive electrode active material with an average particle size R1 and a second positive electrode active material with an average particle size R2, and 10>R2/R1>2; and the positive electrode active material in the second mixed active material layer contacting the current collector is divided into a first positive electrode active material with an average particle size R1' and a second positive electrode active material with an average particle size R2', 100>R2'/R1'>10, and R2=R2'.
(b) An active material layer on a front side of the current collector is divided into two mixed active material layers. The positive electrode active material in the first mixed active material layer on a surface is divided into a first positive electrode active material with an average particle size R1 and a second positive electrode active material with an average particle size R2, and 100>R2/R1>10. The positive electrode active material in the second mixed active material layer contacting the current collector is divided into a first positive electrode active material with an average particle size R1' and a second positive electrode active material with an average particle size R2', 10>R2'/R1'>2, and R2=R2'.
   An active material layer on a back side of the current collector is divided into two mixed active material layers, which are disposed symmetrically with the active material layer on the front side with respect to the current collector, and details are not repeated here.
(c) An active material layer on a front side of the current collector is divided into two mixed active material layers. The positive electrode active material in the first mixed active material layer on a surface is divided into a first positive electrode active material with an average particle size R1 and a second positive electrode active material with an average particle size R2, and 10>R2/R1>2. The positive electrode active material in the second mixed active material layer contacting the current collector is divided into a first positive electrode active material with an average particle size R1' and a second positive electrode active material with an average particle size R2', 100>R2'/R1'>10, and R2=R2'.

An active material layer on a back side of the current collector is divided into two mixed active material layers. The positive electrode active material in the first mixed active material layer on a surface is divided into a first positive electrode active material with an average particle size R1 and a second positive electrode active material with an average particle size R2, and 100>R2/R1>10. The positive electrode active material in the second mixed active material layer contacting the current collector is divided into a first positive electrode active material with an average particle size R1' and a second positive electrode active material with an average particle size R2', 10>R2'/R1'>2, and R2=R2'.

In some embodiments, one of two adjacently disposed sublayers is the mixed active material layer, and the other is a single active material layer. The positive electrode active material in the single active material layer includes the first positive electrode active material or the second positive electrode active material.

The mixed active material layer on one side of the boundary line contains a first positive electrode active material with a small average particle size (average particle size R1) and a second positive electrode active material with a large average particle size (average particle size R2), and the mass proportion of the second positive electrode active material with a small particle size (R1) or the second positive electrode active material with a large particle size (R2) is relatively large; the single active material layer on the other side of the boundary line contains a first positive electrode active material with a small average particle size or a second positive electrode active material with a large average particle size (R1 or R2), and adjustments may be made according to performance design requirements to fully leverage advantages of a layered design.

In some embodiments, in the single active material layer, a mass of the first positive electrode active material or the second positive electrode active material accounts for 90% to 100% of a total mass of the positive electrode active material, and optionally, the mass of the first positive electrode active material or the second positive electrode active material is 95% to 100% of the total mass of the positive electrode active material; and optionally, the mass of the first positive electrode active material or the second positive electrode active material is 98% to 100% of the total mass of the positive electrode active material. Exemplarily, a sum of masses of the first positive electrode active material or the second positive electrode active material in the single active material layer may be 95%, 96%, 97%, 98%, 99%, or 100% of the total mass of the positive electrode active material, or any value within the above two numerical ranges.

In some embodiments, the mixed active material layer is closer to the current collector than the single active material layer, and optionally, a surface of the active material layer is the single active material layer; and the active material layer contacts the current collector through the mixed active material layer.

In some embodiments, the positive electrode active material in the single active material layer includes the first positive electrode active material.

Exemplarily, the positive electrode plate includes the following structures:
(a) An active material layer on a front side of the current collector is divided into a mixed active material layer and a single active material layer. The positive electrode active material in the single active material layer on a surface is a second positive electrode active material with an average particle size R2. The positive electrode active material in the mixed active material layer contacting the current collector is divided into a first positive electrode active material with an average particle size R1 and a second positive electrode active material with an average particle size R2, and 100>R2/R1>10.
   An active material layer on a back side of the current collector is divided into a mixed active material layer and a single active material layer, which are disposed symmetrically with the active material layer on the front side with respect to the current collector.
(b) An active material layer on a front side of the current collector is divided into a mixed active material layer and a single active material layer. The positive electrode active material in the mixed active material layer on a surface is divided into a first positive electrode active material with an average particle size R1 and a second positive electrode active material with an average particle size R2, and 100>R2/R1>10. The positive electrode active material in the single active material layer contacting the current collector is a second positive electrode active material with an average particle size R2.
   An active material layer on a back side of the current collector is divided into a mixed active material layer and a single active material layer, which are disposed symmetrically with the active material layer on the front side with respect to the current collector.
(c) An active material layer on a front side of the current collector is divided into a mixed active material layer and a single active material layer. The positive electrode active material in the single active material layer on a surface is a second positive electrode active material with an average particle size R2. The positive electrode active material in the mixed active material layer contacting the current collector is divided into a first positive electrode active material with an average particle size R1 and a second positive electrode active material with an average particle size R2, and 100>R2/R1>10.
   An active material layer on a back side of the current collector is divided into a mixed active material layer and a single active material layer. The positive electrode active material in the mixed active material layer on a surface is divided into a first positive electrode active material with an average particle size R1 and a second positive electrode active material with an average particle size R2, and 100>R2/R1>10. The positive electrode active material in the single active material layer contacting the current collector is a second positive electrode active material with an average particle size R2.
(d) The structure is substantially the same as (a), with the only difference that: the positive electrode active material in the single active material layer is a first positive electrode active material with an average particle size R1.
(e) The structure is substantially the same as (b), with the only difference that: the positive electrode active material in the single active material layer is a first positive electrode active material with an average particle size R1.
(f) The structure is substantially the same as (c), with the only difference that: the positive electrode active material in the single active material layer is a first positive electrode active material with an average particle size R1.

In some embodiments, active material layers are disposed on both sides of the current collector, respectively; and optionally, the active material layers on both sides of the current collector are symmetrical with respect to the current collector.

In some embodiments, the positive electrode active material includes lithium nickel cobalt manganate (NCM), lithium nickel cobalt aluminate (NCA), quaternary material (NCMA), lithium nickel cobalt manganese aluminate, lithium iron phosphate (LFP), lithium manganese iron phosphate (LMFP), modified doped lithium manganese iron phosphate, lithium cobalt oxide (LCO), lithium manganese oxide (LMO), lithium-rich positive electrode material (Li-rich cathode), lithium nickel manganate, and at least one of doped or coated materials of the above materials. Each positive electrode active material may be designed as a first positive electrode active material with a large particle size (a third positive electrode active material) or a second positive electrode active material with a small particle size (a fourth positive electrode active material), and design adjustments may be made according to performance requirements of layering.

In some embodiments, the first positive electrode active material includes at least one of a spinel structure positive electrode material or an olivine structure positive electrode material.

The first positive electrode active material includes at least one of a spinel structure positive electrode material or an olivine structure positive electrode material, and facilitates obtaining a positive active material layer with a relatively small shrinkage rate.

In some embodiments of the present application, the first positive electrode active material includes Li₁₊ₓMn_{1-y}A_{y}P_{1-z}R_{z}O₄, where x is any value in a range of -0.100 to 0.100, y is any value in a range of 0.001 to 0.500, z is any value in a range of 0.001 to 0.100, A includes one or more elements of Zn, Al, Na, K, Mg, Mo, W, Ti, V, Zr, Fe, Ni, Co, Ga, Sn, Sb, Nb, and Ge, and R includes one or more elements of B, S, Si, and N.

The compound Li₁₊ₓMn_{1-y}A_{y}P_{1-z}R_{z}O₄ may be purchased commercially or prepared according to the following preparation method. The preparation method for the compound Li₁₊ₓMn_{1-y}A_{y}P_{1-z}R_{z}O₄ may include the following steps:
(1) A manganese source, an element A source doped at a manganese site, and an acid are dissolved in a solvent and are stirred to form a suspension of a manganese salt doped with element A, the suspension is filtered, and a filter cake is dried to obtain the manganese salt doped with element A.
(2) A lithium source, a phosphorus source, an element R source, a solvent, and the manganese salt doped with element A obtained in step (1) are added into a reaction vessel, and are ground and mixed to obtain a slurry.
(3) The slurry obtained in step (2) is transferred to a spray drying device for spray-drying and granulating to obtain particles.
(4) The particles obtained in step (3) are sintered to obtain a positive electrode active material.

In any embodiment, the manganese source may be a manganese-containing substance that is known in the art and may be used to prepare lithium manganese phosphate, for example, the manganese source may be selected from one or a combination of elemental manganese, manganese dioxide, manganese phosphate, manganese oxalate, and manganese carbonate.

The acid is selected from one or more of hydrochloric acid, sulfuric acid, nitric acid, phosphoric acid, and organic acids such as oxalic acid, for example, oxalic acid. The element R source is selected from at least one of sulfate, borate, nitrate, and silicate of element R. The element A source is selected from at least one of an elementary substance, oxide, phosphate, oxalate, carbonate, and sulfate of A.

Further, in some embodiments of the present application, the first positive electrode active material includes LiₐAₑMn_{1-f}B_{f}P_{1-g}C_{g}O₄₋ₙDₙ,
where A includes one or more elements of Zn, Al, Na, K, Mg, Nb, Mo, and W;
B includes one or more elements of Ti, V, Zr, Fe, Ni, Mg, Co, Ga, Sn, Sb, Nb, and Ge;
C includes one or more elements of B, S, Si, and N;
D includes one or more elements of S, F, Cl, and Br; and
a is selected from a range of 0.9 to 1.1, e is selected from a range of 0.001 to 0.1, f is selected from a range of 0.001 to 0.5, g is selected from a range of 0.001 to 0.1, n is selected from a range of 0.001 to 0.1, and the first positive electrode active material is electrically neutral.

It is to be noted that, the compound LiₐAₓMn_{1-y}B_{y}P_{1-z}C_{z}O₄₋ₙDₙ is actually a specific LiMPO₄ material, and a preparation method therefor may refer to Li₁₊ₓMn_{1-y}A_{y}P_{1-z}R_{z}O₄, which is not limited herein.

The second positive electrode active material includes a layered structure positive electrode material, facilitating obtaining a positive active material layer with a relatively large shrinkage rate.

Further, in some embodiments of the present application, the second positive electrode active material includes at least one of a ternary material lithium nickel cobalt manganate, a ternary material lithium nickel cobalt aluminate, or a doped modified ternary material.

Further, in some embodiments of the present application, a chemical formula of the doped modified ternary material includes LiNiₘCoᵢMnₖA₁₋ₘ₋ᵢ₋ₖO₂, where 0.5≤m≤0.98, 0.02≤i≤ 0.18, and 0≤k≤0.35.

In some embodiments, the sublayer contains a linear conductive agent; optionally, in the sublayer, a mass proportion of the linear conductive agent with a length ≥1 µm is 0.2% to 1%; and optionally, the linear conductive agent includes at least one of carbon nanotubes, carbon fiber, and linear graphene. The sublayer containing a proportion of linear conductive substance maintains stability of a conductive network.

In some embodiments, in two adjacent sublayers, a porosity of the sublayer on a side away from the current collector is ≥30%, and a porosity of the sublayer on a side close to the current collector is ≥50%; and
optionally, the porosity of the sublayer on the side away from the current collector is ≥50%,and the porosity of the sublayer on the side close to the current collector is ≥60%.

The porosity refers to a volume proportion of pores inherently present inside the active material layer before charge-discharge cycles. According to the embodiments of the present application, the porosity may be determined by a gas displacement method, specifically, according to the embodiments of the present application, may be determined through the following steps with reference to GB/T 24586-2009: the electrode plate is immersed in dimethyl carbonate (DMC) for cleaning and is air-dried; and if the electrode plate is a fresh electrode plate, cleaning is not required. A sample is loaded into a sample cup, the number of samples is recorded to calculate an apparent volume, the sample is placed in a true density tester, and a true volume is measured using the gas displacement method. The porosity of the electrode plate is a percentage of a pore volume in the electrode plate to a total volume of the electrode plate, calculated by the formula: porosity=(V-V0)/V×100%, where V0 is the true volume, and V is the apparent volume; the apparent volume V=S*H*A, where S is a surface area of the electrode plate, H is a thickness of the electrode plate, and A is the number of electrode plate samples.

Optionally, in two adjacent sublayers, the porosity of the sublayer on the side away from the current collector may be 30%, 40%, 50%, 60%, or 70%, and the porosity of the sublayer on the side close to the current collector may be 50%, 55%, 60%, 65%, 70%, or 75%.

In some embodiments, a mass proportion of the positive electrode active material in the active material layer is 89.0% to 98.0%.

In some embodiments, sublayers of the positive electrode plate are all prepared from positive electrode slurry including the positive electrode active material, a conductive agent, and an adhesive conforming to the above design principles. The positive electrode active material in the sublayer accounts for 89.0% to 98.0% of a total mass of the sublayer, the conductive agent accounts for 0.4% to 5.0% of a total mass of the positive electrode plate, and the adhesive accounts for 0.6% to 7.0% of the total mass of the positive electrode plate.

As an example, the conductive agent may include at least one of superconducting carbon, acetylene black, carbon black, Ketjen black, carbon dots, carbon nanotubes, graphene, and carbon nanofiber.

As an example, the adhesive may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

To meet actual production demands, a coating weight of each sublayer with a coating area of 1540.25 mm² is at least 50 mg.

In some embodiments, the positive electrode current collector may adopt a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), polyethylene (PE), and the like).

In some embodiments, the positive electrode plate may be prepared by the following method: components for preparing the positive electrode plate, such as the positive electrode active material, the conductive agent, the adhesive, and any other components, are dispersed in a solvent (for example, N-methylpyrrolidone) to form positive electrode slurry; the positive electrode slurry is applied on the positive electrode current collector, and the positive electrode plate is obtained after drying, cold pressing, and other processes.

According to some embodiments of the present application, the battery includes a cell composed of a negative electrode plate, a separator, and the positive electrode plate provided above. The battery includes any form of a battery cell, a battery module, or a battery pack.

### [Negative electrode plate]

The negative electrode plate includes a negative electrode current collector and a negative electrode film layer disposed on at least one surface of the negative electrode current collector, where the negative electrode film layer includes a negative electrode active material.

As an example, the negative electrode current collector has two opposite surfaces in a thickness direction thereof, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), polyethylene (PE), and the like).

In some embodiments, the negative electrode active material may adopt a negative electrode active material that is known in the art and is used for batteries. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, or tin alloy. However, the present application is not limited to these materials, and other conventional materials that may be used as negative electrode active materials of batteries may be used instead. These negative electrode active materials may be used alone or in a combination of two or more.

In some embodiments, the negative electrode film layer further optionally includes an adhesive. The adhesive may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives, such as a thickener (such as sodium carboxymethyl cellulose (CMC-Na)).

In some embodiments, the negative electrode plate may be prepared by the following method: components for preparing the negative electrode plate, such as the negative electrode active material, the conductive agent, the adhesive, and any other components, are dispersed in a solvent (for example, deionized water) to form negative electrode slurry; and the negative electrode slurry is applied on the negative electrode current collector, and the negative electrode plate is obtained after drying, cold pressing, and other processes.

### [Separator]

The present application imposes no particular restrictions on the type of the separator, and any well-known porous structure separator with good chemical stability and mechanical stability may be selected.

In some embodiments, a material of the separator may be selected from at least one of glass fiber, non-woven fabric, polyethylene, polypropylene, and polyvinylidene fluoride. The separator may be a single-layer film or a multilayer composite film, with no particular restriction. When the separator is a multilayer composite film, materials of each layer may be the same or different, with no particular restriction.

In some embodiments, the positive electrode plate, the negative electrode plate, and the separator may be made into an electrode assembly through a winding process or a laminating process.

In some embodiments, a secondary battery may include an outer package. The outer package may be configured to encapsulate the electrode assembly and an electrolyte described above.

In some embodiments, the outer package of the secondary battery may be a hard shell, for example, a hard plastic shell, an aluminum shell, or a steel shell. The outer package of the secondary battery may alternatively be a soft package, for example, a pouch-type soft package. A material of the soft package may be plastic, such as polypropylene, polybutylene terephthalate, and polybutylene succinate.

### [Electrolyte]

The battery cell further includes an electrolyte, and the electrolyte achieves an effect of conducting ions between the positive electrode plate and the negative electrode plate. The electrolyte may be in a liquid state or a gel state.

In some embodiments, the electrolyte adopts an electrolytic solution. The electrolytic solution includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution further optionally includes an additive. For example, the additive may include a negative electrode film-forming additive or a positive electrode film-forming additive, or may include an additive capable of improving performance of the battery, for example, an additive for improving overcharge performance of the battery, or an additive for improving high-temperature or low-temperature performance of the battery.

According to some embodiments of the present application, the electric apparatus includes the battery provided above.

Next, one or more embodiments are described in more detail with reference to the examples below. Certainly, these examples do not limit the scope of the one or more embodiments.

The first material used in the experiments was all Li_{1.001}Mn_{0.999}Fe_{0.001}P_{0.999}Si_{0.001}O₄, and the second material was all Li_{1.00}Ni_{0.82}Co_{0.12}Mn_{0.06}O₂.

A preparation method of the first material compound Li_{1.001}Mn_{0.999}Fe_{0.001}P_{0.999}Si_{0.001}O₄ included:
Step S1: Preparation of Fe-doped manganese oxalate

1148.2 g of manganese carbonate and 1.2 g of ferrous carbonate were added to a mixer and thoroughly mixed for 6 hours. Then, the obtained mixture was transferred to a reaction kettle, 5 L of deionized water and 1260.6 g of oxalic acid dihydrate were added, heated to 80°C, and thoroughly stirred at 500 rpm for 6 hours to mix uniformly until no bubbles were generated upon reaction completion, and an Fe-doped manganese oxalate suspension was obtained. Then, the suspension was filtered, dried at 120°C, and sand-milled to obtain manganese iron oxalate particles with a particle size of 100 nm.

### Step S2: Preparation of Li_{1.001}Mn_{0.999}Fe_{0.001}P_{0.999}Si_{0.001}O₄

1789.6 g of the manganese iron oxalate prepared in step S1 (calculated as C₂O₄Mn_{0.999}Fe_{0.001}•2H₂O), 369.8 g of lithium carbonate, 1148.9 g of ammonium dihydrogen phosphate, and 0.8 g of silicic acid were added to 20 L of deionized water, thoroughly stirred, and uniformly mixed and reacted at 80°C for 10 hours to obtain a slurry. The slurry was transferred to a spray-drying device for spray-drying and granulating, and dried at 250°C to obtain powder. In a protective atmosphere (90% nitrogen and 10% hydrogen), the powder was sintered in a roller kiln at 700°C for 4 hours.

Preparation steps of lithium manganese iron phosphate material doped with other elements (such as Ti) were the same as the preparation steps of the aforementioned compound B, with the only difference that silicic acid was replaced with a source of the corresponding element (such as titanium tetrachloride) and a raw material ratio was adjusted to satisfy a molar ratio in a chemical formula of the corresponding compound.

The first material might alternatively be directly obtained through commercial purchase.

The layered structure second material Li_{1.00}Ni_{0.82}Co_{0.12}Mn_{0.06}O₂ was obtained through commercial purchase.

### Example 1

### (1) Preparation of positive electrode plate

A positive electrode active material, an adhesive PVDF, and a conductive agent carbon black were mixed at a mass ratio of 97wt%:1.5wt%:1.5wt% and dispersed in N-methylpyrrolidone. The positive electrode active material was divided into a first material and a second material. An average particle size R1 of the first material was 0.2 µm, an average particle size R2 of the second material was 0.4 µm, a mass ratio of the first material to the second material was 35%:65%, and positive electrode active material slurry A1 was prepared.

The positive electrode active material slurry A1 was applied on both side surfaces of an aluminum foil with a coating weight of 200 mg/1540.25 mm² to obtain a positive electrode plate.

### (2) Preparation of lithium-ion secondary battery

A lithium-ion secondary battery was composed of main materials including a positive electrode plate, a negative electrode plate, a separator, and an electrolytic solution, as well as mechanical parts such as an aluminum shell and a top cover. A compaction density of the positive electrode plate was 2.35, and a thickness was 213 µm; contents of a negative electrode active material, an adhesive, a conductive agent of a negative electrode material were respectively: 96.5% graphite+1.3% SBR+1.1% CMC+0.4% SP, with a compaction density of 1.65 and a thickness of 142 µm; contents of a solvent, an electrolytic solution additive, and a lithium salt of an electrolytic solution were respectively: ethylene carbonate, dimethyl carbonate, and 1,2-propylene carbonate were mixed at a volume ratio of 1:1:1, and then LiPF₆ was uniformly dissolved in the above solution to obtain the electrolytic solution. In the electrolytic solution, a concentration of LiPF₆ was 1 mol/L. Specifically, the positive electrode plate, the negative electrode plate, and the separator were formed into a bare cell, the bare cell was insulated and coated and then loaded in the aluminum shell, a top cover was welded to obtain a dry cell; and the dry cell was baked and then injected with the electrolytic solution, and was subjected to formation and aging to obtain a hard-shell battery.

### Example 2

### (1) Preparation of positive electrode plate

A positive electrode active material, an adhesive PVDF, and a conductive agent carbon black were mixed at a mass ratio of 97wt%:1.5wt%:1.5wt% and dispersed in N-methylpyrrolidone. The positive electrode active material was divided into a first material and a second material. An average particle size R1 of the first material was 0.2 µm, an average particle size R2 of the second material was 0.4 µm, a mass ratio of the first material to the second material was 35%:65%, and positive electrode active material slurry A1 was prepared.

A positive electrode active material, an adhesive PVDF, and a conductive agent carbon black were mixed at a mass ratio of 97wt%:1.5wt%:1.5wt% and dispersed in N-methylpyrrolidone. The positive electrode active material was a first material with an average particle size R1 of 0.2 µm to prepare positive electrode active material slurry A2.

The positive electrode active material slurry A1 was applied on both side surfaces of an aluminum foil with a coating weight of 100 mg/1540.25 mm², and the positive electrode active material slurry A2 was applied on a surface of the positive electrode already coated with the positive electrode active material slurry A1 with a coating weight of 100 mg/1540.25 mm² to obtain a positive electrode plate.

A lithium-ion secondary battery was prepared in the same manner as in Example 1.

### Example 3

### (1) Preparation of positive electrode plate

A positive electrode active material, an adhesive PVDF, and a conductive agent carbon black were mixed at a mass ratio of 97wt%:1.5wt%:1.5wt% and dispersed in N-methylpyrrolidone. The positive electrode active material was divided into a first material and a second material. An average particle size R1 of the first material was 0.2 µm, an average particle size R2 of the second material was 1 µm, a mass proportion of the first material to the second material was 35%:65%, and positive electrode active material slurry A1 was prepared.

A positive electrode active material, an adhesive PVDF, and a conductive agent carbon black were mixed at a mass ratio of 97wt%:1.5wt%:1.5wt% and dispersed in N-methylpyrrolidone. The positive electrode active material was divided into a first material and a second material. An average particle size R1' of the first material was 0.2 µm, an average particle size R2' of the second material was 2 µm, a mass proportion of the first material to the second material was 35%:65%, and a positive electrode active material slurry A2 was prepared.

The positive electrode active material slurry A1 was applied on both side surfaces of an aluminum foil with a coating weight of 100 mg/1540.25 mm², and the positive electrode active material slurry A2 was applied on a surface of the positive electrode already coated with the positive electrode active material slurry A1 with a coating weight of 100 mg/1540.25 mm² to obtain a positive electrode plate.

### (2) Preparation of lithium-ion secondary battery

A lithium-ion secondary battery was composed of main materials including a positive electrode plate, a negative electrode plate, a separator, and an electrolytic solution, as well as mechanical parts such as an aluminum shell and a top cover. A compaction density of the positive electrode plate was 2.35, and a thickness was 213 µm; contents of a negative electrode active material, an adhesive, and a conductive agent of a negative electrode material were respectively: 96.5% graphite+1.3% SBR+1.1% CMC+0.4% SP, with a compaction density of 1.65 and a thickness of 142 µm; contents of a solvent, an electrolytic solution additive, and a lithium salt of the electrolytic solution were respectively: ethylene carbonate, dimethyl carbonate, and 1,2-propylene carbonate were mixed at a volume ratio of 1:1:1, and then LiPF₆ was uniformly dissolved in the above solution to obtain the electrolytic solution. In the electrolytic solution, a concentration of LiPF₆ was 1 mol/L. Specifically, the positive electrode plate, the negative electrode plate, and the separator were formed into a bare cell, the bare cell was insulated and coated and then loaded in the aluminum shell, a top cover was welded to obtain a dry cell; and the dry cell was baked and then injected with the electrolytic solution, and was subjected to formation and aging to obtain a hard-shell battery.

### Example 4

Except that in step (1), a mass ratio of the first material to the second material forming the positive electrode active material slurry A1 was 5%:95%, and a mass ratio of the first material to the second material forming the positive electrode active material slurry A2 was 5%:95%, the rest was the same as in Example 3.

### Example 5

Except that in step (1), a mass ratio of the first material to the second material forming the positive electrode active material slurry A1 was 35%:65%, and a mass ratio of the first material to the second material forming the positive electrode active material slurry A2 was 5%:95%, the rest was the same as in Example 3.

### Example 6

Except that in step (1), an average particle size R1 of the first material forming the positive electrode active material slurry A2 was 0.2 µm, an average particle size R2 of the second material was 1 µm (the first material and the second material were the same as the materials in the positive electrode active material slurry A1), but a mass ratio of the first material to the second material was 20%:80%, the rest was the same as in Example 3.

### Example 7

Except that in step (1), an average particle size R1 of the first material forming the positive electrode active material slurry A1 was 0.2 µm, an average particle size R2 of the second material was 10 µm, an average particle size R1' of the first material forming the positive electrode active material slurry A2 was 0.1 µm, and an average particle size R2' of the second material was 10 µm, the rest was the same as in Example 3.

### Example 8

Except that in step (1), an average particle size R1 of the first material forming the positive electrode active material slurry A1 was 0.2 µm, an average particle size R2 of the second material was 1 µm, an average particle size R1' of the first material forming the positive electrode active material slurry A2 was 0.2 µm, and an average particle size R2' of the second material was 30 µm, the rest was the same as in Example 3.

### Example 9

Except that in step (1), a mass ratio of the first material to the second material forming the positive electrode active material slurry A2 was 50%:50%, the rest was the same as in Example 3.

### Example 10

Except that in step (1), the positive electrode active material slurry A2 was applied on both side surfaces of an aluminum foil, and the positive electrode active material slurry A1 was applied on a surface of the positive electrode already coated with the positive electrode active material slurry A2, that was, A1 in this example was A2 in Example 1, and A2 in this example was A2 in Example 1, obtaining a positive electrode plate, the rest was the same as in Example 3.

### Example 11

Except that in step (1), a positive electrode active material, an adhesive PVDF, and a conductive agent carbon black were mixed at a mass ratio of 97wt%:1.5wt%:1.5wt% and dispersed in N-methylpyrrolidone. The positive electrode active material was divided into a first material and a second material. An average particle size R1* of the first material was 0.2 µm, an average particle size R2* of the second material was 4 µm, and a mass ratio of the first material to the second material was 35%:65%, forming a positive electrode active material slurry A3.

The positive electrode active material slurry A1 was applied on both side surfaces of an aluminum foil with a coating weight of 70 mg/1540.25 mm², the positive electrode active material slurry A2 was applied on a surface of the positive electrode already coated with the positive electrode active material slurry A1 with a coating weight of 70 mg/1540.25 mm², and the positive electrode active material slurry A3 was applied on a surface of the positive electrode already coated with the positive electrode active material slurry A2 with a coating weight of 60 mg/1540.25 mm² to obtain a positive electrode plate.

The rest was the same as in Example 3.

### Example 12

Except that in step (1), a positive electrode active material forming the positive electrode active material slurry A2 was the first material used to form the positive electrode active material slurry A1, with an average particle size R1 of 0.2 µm, the rest was the same as in Example 3.

### Example 13

Except that in step (1), a positive electrode active material forming the positive electrode active material slurry A2 was the second material used to form the positive electrode active material slurry A1, with an average particle size R2 of 1 µm, the rest was the same as in Example 3.

### Example 14

Except that in step (1), a mass ratio of the first material to the second material forming the positive electrode active material slurry A1 was 65%:35%, the rest was the same as in Example 1.

### Example 15

Except that in step (1), a mass ratio of the first material to the second material forming the positive electrode active material slurry A1 was 65%:35%, the rest was the same as in Example 2.

### Example 16

Except that in step (1), a mass ratio of the first material to the second material forming the positive electrode active material slurry A1 was 65%:35%, and a mass ratio of the first material to the second material forming the positive electrode active material slurry A2 was 65%:35%, the rest was the same as in Example 3.

### Comparative Example 1

Except that in step (1), a mass ratio of the first material to the second material forming the positive electrode active material slurry A1 was 50%:50%, and a mass ratio of the first material to the second material forming the positive electrode active material slurry A2 was 50%:50%, the rest was the same as in Example 3.

### Comparative Example 2

Except that in step (1), an average particle size R1 of the first material forming the positive electrode active material slurry A1 was 0.2 µm, an average particle size R2 of the second material was 1 µm, and a mass ratio of the first material to the second material was 50%:50%, the rest was the same as in Example 1.

### Comparative Example 3

Except that in step (1), an average particle size R1 of the first material forming the positive electrode active material slurry A1 was 0.2 µm, an average particle size R2 of the second material was 0.4 µm, and a mass ratio of the first material to the second material was 50%:50%, the rest was the same as in Example 1.

In Examples 1 to 16 and Comparative Examples 1 to 3, positive electrode active materials with the same name are the same material. The hard-shell batteries obtained from Examples 1 to 16 and Comparative Examples 1 to 3 were subjected to cycle testing:
In a constant temperature environment of 25°C, a full battery was charged at 1C to 4.3 V, then charged at a constant voltage of 4.3 V until a current was less than or equal to 0.05 mA. After standing for 5 minutes, the battery was discharged at 1C to 2.5 V, and a discharge capacity at this time was recorded as D0, with an impedance of X0. The aforementioned charge-discharge cycle was repeated 500 times, a discharge capacity of a last cycle was recorded as D1, with an impedance of X1. A capacity retention rate was calculated as D1/D0×100%, and an impedance growth rate was calculated as (D1-D0)/D0×100%.

Performance of the tested batteries is shown in Table 1 below:

**Table 1 Battery performance**

| | Layering | First material | Second material | Mass ratio of first material to second material | Capacity retention rate (500 cycles) (%) | Impedance growth (500 cycles) (%) |
|---|---|---|---|---|---|---|
| Example 1 | A1 | R1=0.2 µm | R2=0.4 µm | 35%:65% | 91% | 19% |
| Example 2 | A1 | R1=0.2 µm | R2=0.4 µm | 35%:65% | 93% | 18% |
| | A2 | R1=0.2 µm | - | 100% | | |
| Example 3 | A1 | R1=0.2 µm | R2=1 µm | 35%:65% | 90% | 20% |
| | A2 | R1'=0.2 µm | R2'=2 µm | 35%:65% | | |
| Example 4 | A1 | R1=0.2 µm | R2=1 µm | 5%:95% | 85% | 30% |
| | A2 | R1'=0.2 µm | R2'=2 µm | 5%:95% | | |
| Example 5 | A1 | R1=0.2 µm | R2=1 µm | 35%:65% | 86% | 24% |
| | A2 | R1'=0.2 µm | R2'=2 µm | 5%:95% | | |
| Example 6 | A1 | R1=0.2 µm | R2=1 µm | 35%:65% | 85% | 25% |
| | A2 | R1'=0.2 µm | R2'=1 µm | 20%:80% | | |
| Example 7 | A1 | R1=0.2 µm | R2=10 µm | 35%:65% | 84% | 30% |
| | A2 | R1'=0.1 µm | R2'=10 µm | 35%:65% | | |
| Example 8 | A1 | R1=0.2 µm | R2=1 µm | 35%:65% | 87% | 32% |
| | A2 | R1'=0.2 µm | R2'=30 µm | 35%:65% | | |
| Example 9 | A1 | R1=0.2 µm | R2=1 µm | 35%:65% | 82% | 28% |
| | A2 | R1'=0.2 µm | R2'=2 µm | 50%:50% | | |
| Example 10 | A1 | R1=0.2 µm | R2=2 µm | 35%:65% | 85% | 25% |
| | A2 | R1'=0.2 µm | R2'=1 µm | 35%:65% | | |
| Example 11 | A1 | R1=0.2 µm | R2=1 µm | 35%:65% | 84% | 27% |
| | A2 | R1'=0.2 µm | R2'=2 µm | 35%:65% | | |
| | A3 | R1*=0.2 µm | R2*=4 µm | 35%:65% | | |
| Example 12 | A1 | R1=0.2 µm | R2=1 µm | 35%:65% | 83% | 22% |
| | A2 | R1=0.2 µm | - | 100% | | |
| Example 13 | A1 | R1=0.2 µm | R2=1 µm | 35%:65% | 85% | 23% |
| | A2 | - | R2=1 µm | 100% | | |
| Example 14 | A1 | R1=0.2 µm | R2=0.4 µm | 65%:35% | 92% | 18% |
| Example 15 | A1 | R1=0.2 µm | R2=0.4 µm | 65%:35% | 92% | 17% |
| | A2 | R1=0.2 µm | - | 100% | | |
| Example 16 | A1 | R1=0.2 µm | R2=1 µm | 65%:35% | 91% | 19% |
| | A2 | R1'=0.2 µm | R2'=2 µm | 65%:35% | | |
| Comparative Example 1 | A1 | R1=0.2 µm | R2=1 µm | 50%:50% | 78% | 45% |
| | A2 | R1'=0.2 µm | R2'=2 µm | 50%:50% | | |
| Comparative Example 2 | A1 | R1=0.2 µm | R2=1 µm | 50%:50% | 76% | 48% |
| Comparative Example 3 | A1 | R1=0.2 µm | R2=0.4 µm | 50%:50% | 80% | 35% |

It may be learned from the results in Table 1:
Compared with Comparative Examples 1 to 3, the active material layer of the positive electrode plate in Examples 1 to 16 contains at least one mixed positive electrode material layer formed by a large-particle-size positive electrode active material and a small-particle-size positive electrode active material according to a large mass proportion of the large-particle-size material or the small-particle-size material. After a plurality of cycles of battery use, the capacity retention rate of the battery is increased, and the impedance growth of the battery is reduced, thereby enhancing the kinetic performance of the battery.

Compared with Comparative Example 3, the active material layer in Example 1 is a mixed positive electrode material layer formed by a large-particle-size positive electrode active material and a small-particle-size positive electrode active material according to a high-low mass proportion. After a plurality of cycles of battery use, the capacity retention rate of the battery is increased, and the impedance growth of the battery is reduced, thereby enhancing the kinetic performance of the battery. The active material layer in Example 14 is a mixed positive electrode material layer formed by a small-particle-size positive electrode active material and a large-particle-size positive electrode active material according to a high-low mass proportion, which also enhances the kinetic performance of the battery.

Compared with Comparative Example 1, the active material layer of the positive electrode plate in Examples 3 to 8 is layered, and each layer is a mixed positive electrode material layer formed by a large-particle-size positive electrode active material and a small-particle-size positive electrode active material according to a high-low mass proportion. After a plurality of cycles of battery use, the capacity retention rate of the battery is increased, and the impedance growth of the battery is reduced, thereby enhancing the kinetic performance of the battery; the active material layer of the positive electrode plate in Example 9 is layered, and one layer satisfies an average particle size ratio of large-particle-size and small-particle-size positive electrode active materials with a large mass proportion of the large-particle-size positive electrode active material, which can increase the capacity retention rate of the battery and reduce the impedance growth of the battery. The active material layer of the positive electrode plate in Example 16 is layered, and each layer is a mixed positive electrode material layer formed by a small-particle-size positive electrode active material and a large-particle-size positive electrode active material according to a high-low mass proportion, which also enhances the kinetic performance of the battery.

Compared with Comparative Example 1, the positive electrode plate in Examples 3 to 6 is provided with two mixed positive electrode material layers, and a mass proportion of the large-particle-size positive electrode active material in the positive electrode active material of the mixed positive electrode material layers is 50% to 95%, optionally 65% to 80%. After a plurality of cycles of battery use, the capacity retention rate of the battery is increased, and the impedance growth of the battery is reduced.

Compared with Comparative Example 1, an average particle size ratio of the large-particle-size positive electrode active material and the small-particle-size positive electrode active material in the mixed positive electrode material layer of the positive electrode plate in Examples 3, 7 to 8, and 10 is ≥2, optionally ≥5, and optionally ≥10. After a plurality of cycles of battery use, the capacity retention rate of the battery is increased, and the impedance growth of the battery is reduced.

Compared with Comparative Example 1, the positive electrode plate in Example 11 adopts a plurality of mixed positive electrode material layers, each mixed positive electrode material layer uses various positive electrode active materials, and a large mass proportion of the large-particle-size positive electrode active material is present, all of which can increase the capacity retention rate of the battery and reduce the impedance growth of the battery.

Compared with Comparative Example 2, the positive electrode plate in Examples 12 to 13 is layered with an adjacent mixed active material layer and a single active material layer. The mixed active material layer is formed by a large-particle-size positive electrode active material and a small-particle-size positive electrode active material according to a high-low mass proportion, and the positive electrode active material in the single active material layer is one type of positive electrode active material from the mixed active material layer. After a plurality of cycles of battery use, the capacity retention rate of the battery is increased, and the impedance growth of the battery is reduced, thereby enhancing the kinetic performance of the battery.

Compared with Comparative Example 3, the positive electrode plate in Example 2 is layered with a mixed active material layer and a single active material layer. The mixed active material layer is formed by a large-particle-size positive electrode active material and a small-particle-size positive electrode active material according to a high-low mass proportion, and the positive electrode active material in the single active material layer is a small-particle-size positive electrode active material from the mixed active material layer. After a plurality of cycles of battery use, the capacity retention rate of the battery is increased, and the impedance growth of the battery is reduced, thereby enhancing the kinetic performance of the battery. The positive electrode plate in Example 15 differs from Example 1 in that the mixed active material layer is formed by a small-particle-size and large-particle-size positive electrode active material with a high-low mass proportion, which also enhances the kinetic performance of the battery.

The embodiments described above are some embodiments of the present application, not all embodiments. The detailed description of the embodiments of the present application is not intended to limit the scope of protection claimed by the present application, but merely represents selected embodiments of the present application. All other embodiments obtained by persons of ordinary skill in the art based on the embodiments of the present application without creative efforts shall fall within the protection scope of the present application.

## Claims

1. A positive electrode plate, **characterized by** comprising a current collector and an active material layer disposed on at least one side surface of the current collector, wherein the active material layer comprises at least one mixed active material layer, in the mixed active material layer, a positive electrode active material comprises a first positive electrode active material and a second positive electrode active material, an average particle size, R2, of the second positive electrode active material is greater than an average particle size, R1, of the first positive electrode active material, R2/R1≥2, and the first positive electrode active material or the second positive electrode active material accounts for 55% to 95% of a total mass of the positive electrode active material in the mixed active material layer.

2. The positive electrode plate according to claim 1, wherein the first positive electrode active material or the second positive electrode active material accounts for 65% to 80% of the total mass of the positive electrode active material in the mixed active material layer.

3. The positive electrode plate according to claim 1 or 2, wherein 100≥R2/R1≥5, optionally 100≥R2/R1≥10.

4. The positive electrode plate according to any one of claims 1 to 3, wherein R1 is any value between 0.1 µm and 0.4 µm, and R2 is any value between 1 µm and 20 µm.

5. The positive electrode plate according to any one of claims 1 to 4, wherein in the mixed active material layer, the first positive electrode active material and the second positive electrode active material are different positive electrode active materials.

6. The positive electrode plate according to any one of claims 1 to 5, wherein the active material layer comprises at least two sublayers, wherein at least one of the sublayers is the mixed active material layer.

7. The positive electrode plate according to claim 6, wherein two adjacently disposed sublayers are respectively a first mixed active material layer and a second mixed active material layer, an average particle size of the first positive electrode active material in the first mixed active material layer is R1, an average particle size of the second positive electrode active material is R2, R2/R1≥2, a positive electrode active material in the second mixed active material layer comprises a third positive electrode active material and a fourth positive electrode active material, an average particle size of the third positive electrode active material is R1', an average particle size of the fourth positive electrode active material is R2', and R2'/R1'≥2.

8. The positive electrode plate according to claim 7, wherein a difference between R2 and R1' is not greater than 10 µm, and/or a difference between R2' and R1 is not greater than 10 µm.

9. The positive electrode plate according to claim 7, wherein the first mixed active material layer is closer to the current collector than the second mixed active material layer, and a value of R2/R1 is greater than a value of R2'/R1'.

10. The positive electrode plate according to claim 6, wherein one of two adjacently disposed sublayers is the mixed active material layer, the other is a single active material layer, and a positive electrode active material in the single active material layer comprises the first positive electrode active material or the second positive electrode active material.

11. The positive electrode plate according to claim 10, wherein the mixed active material layer is closer to the current collector than the single active material layer.

12. The positive electrode plate according to claim 10, wherein the positive electrode active material in the single active material layer comprises the first positive electrode active material.

13. The positive electrode plate according to any one of claims 1 to 12, wherein the positive electrode active material comprises at least one of lithium nickel cobalt manganate, lithium nickel cobalt aluminate, lithium nickel cobalt manganese aluminate, lithium iron phosphate, lithium manganese iron phosphate, doped lithium manganese iron phosphate, lithium cobalt oxide, lithium manganese oxide, a lithium-rich positive electrode material, lithium nickel manganate, and doped or coated materials of the above materials.

14. The positive electrode plate according to claim 6, wherein the sublayer contains a linear conductive agent; optionally, in the sublayer, a mass proportion of the linear conductive agent with a length ≥1 µm is 0.2% to 1%; and optionally, the linear conductive agent comprises at least one of carbon nanotubes, carbon fiber, and linear graphene.

15. The positive electrode plate according to claim 6, wherein in two adjacent sublayers, a porosity of the sublayer on a side away from the current collector is ≥30%, and a porosity of the sublayer on a side close to the current collector is ≥50%;
optionally, the porosity of the sublayer on the side away from the current collector is ≥50%,and the porosity of the sublayer on the side close to the current collector is ≥60%.

16. A battery, comprising a cell comprising the positive electrode plate according to any one of claims 1 to 15.

17. An electric apparatus, comprising the battery according to claim 16.
